# EUROPEAN PATENT SPECIFICATION

(11) **EP 4 497 668 B1**
(45) Date of publication and mention of the grant of the patent: **01.10.2025**
(21) Application number: 23218256.8
(22) Date of filing: 19.12.2023
(51) Int. Cl.: B62J 27/00, B62M 19/00

(54) **DEVICE AND METHOD FOR COLLISION RISK WARNING OF CHAINLESS ELECTRIC BICYCLE**
VORRICHTUNG UND VERFAHREN ZUR KOLLISIONSRISIKOWARNUNG FÜR EIN KETTENLOSES ELEKTRISCHES FAHRRAD
DISPOSITIF ET PROCÉDÉ D'AVERTISSEMENT DE RISQUE DE COLLISION DE BICYCLETTE ÉLECTRIQUE SANS CHAÎNE

(30) Priority: 26.07.2023 KR 20230097293
(43) Date of publication of application: 29.01.2025
(73) Proprietor: HL Mando Corporation, Pyeongtaek-si, Gyeonggi-do 17962 (KR)
(72) Inventor: KU, Hyun, 17962 Pyeongtaek-si, Gyeonggi-do (KR)
(74) Representative: Pfenning, Meinig & Partner mbB

(56) References cited:
- US-A1- 2015 149 006
- US-A1- 2022 194 520
- US-A1- 2022 219 776

## Description

### TECHNICAL FIELD

An embodiment of the present disclosure relates to a device and method for a collision risk warning of a chainless electric bicycle capable of detecting a movement of surrounding objects and notifying a collision risk situation depending on the approach distance.

### BACKGROUND

In a chainless electric bicycle, a front wheel as a steering wheel and a rear wheel as a driving wheel may be rotatably installed on a main frame, and the drive motor, which generates driving force by power supplied from the battery, rotates the driving wheel to the move a chainless electric bicycle forward.

In addition, a chainless electric bicycle may generate power or electricity using the rotational power generated when the user pedals, instead of transmitting the rotational power generated when the user pedals to the wheels through a chain. Additionally, a chainless electric bicycle may store generated electric energy in a battery, and may generate driving force by driving a drive motor using the electric energy stored in the battery.

In this case, a chainless electric bicycles may identify the rotation speed of the pedal manupuated by an user, and control the speed of the motor in proportion to the rotation speed of the pedal.

In addition, in a chainless electric bicycle, since there is no chain connected to the pedal, there is no load when pedaling, so that there may provide a pedal feeling similar to that of a regular bicycle with a chain by controlling the load on the pedals according to the pedal rotation speed.

Such a chainless electric bicycle may predict a distance to the front and side-front objects while driving, but there is a problem in that accidents cannot be prevented in advance since the distance to the rear and side-rear objects cannot be predicted.

Therefore, there is a need for safety manner for detecting a movement of surrounding objects and notifying a collision risk situation according to an approach distance.

US 2022/219776 A1 discloses a chainless electric bicycle comprising with a reaction motor configured to be installed on a pedal which controls a speed or a torque of a driving motor, and generate a basic reaction torque according to rotation of the pedal and a controller configured to detect a movement of an object in a surveillance area based on information transmitted from a sensor and determine an approach distance of the object.

### SUMMARY

According to the present embodiments, there may provide a device and method for a collision risk warning of a chainless electric bicycle capable of notifying a collision risk situation depending on a load applied when the user steps on the pedal.

In accordance with an aspect of the present disclosure, there is provided a device for a collision risk warning of a chainless electric bicycle including a reaction motor configured to be installed on a pedal which controls a speed or a torque of a driving motor, and generate a basic reaction torque T1 according to rotation of the pedal, and a controller configured to detect a movement of an object in a surveillance area based on information transmitted from a sensor and determine an approach distance D of the object, and drive the reaction motor based on a final reaction torque T2 determined by varying the basic reaction torque according to the approach distance D.

The controller may include a detector configured to detect the movement of the object within the surveillance area based on the information transmitted from the sensor, a determiner configured to determine the approach distance D of the object in response to a detection of the movement of the object by the detector, and a pedal load adjuster configured to determine a final reaction torque T2 by varying the basic reaction torque T1 according to the approach distance D determined from the determiner, and drive the reaction motor based on the final reaction torque.

The controller may further include a pedal feeling controller configured to adjust the basic reaction torque T1 according to the rotation of the pedal to match a target pedal feeling corresponding to the rotation of the pedal.

In addition, the device for a collision risk warning of a chainless electric bicycle may further include a mode switch to select one of a plurality of pedal feeling modes.

In addition, the device for a collision risk warning of a chainless electric bicycle may further include a display module configured to display a pedal feeling mode selected by the mode switch.

The controller may include a mode selector configured to control the pedal load adjuster to generate a pedal load corresponding to the pedal feeling mode selected by the mode switch among the plurality of pedal feeling modes.

The pedal feeling mode may include a first mode in which, if the approach distance D of the object is within a first threshold distance X1, the final reaction torque T2 is determined by varying the basic reaction torque T1 to be increased or decreased as the approach distance D decreases, the reaction motor is driven based on the final reaction torque T2.

The pedal feeling mode may include a second mode in which, if the approach distance D of the object is within a first threshold distance X1, the basic reaction force torque T1 repeats increase and decrease at a specific cycle, and the final reaction torque T2 is determined by varying the basic reaction torque T1 so as for an increase and decrease in torque of the basic reaction torque T1 to increase as the approach distance D decreases, and the reaction motor is driven based on the final reaction torque T2.

The pedal feeling mode may include a third mode in which, if the approach distance D of the object is between a second threshold distance X2 and a third threshold distance X3, the final reaction torque T2 is determined by varying the basic reaction torque T1 to be increased or decreased, and the reaction motor is driven based on the final reaction torque T2.

The pedal feeling mode may include a fourth mode in which, the final reaction torque T2 is determined by varying the basic reaction torque T1 to be increased or decreased as the approach distance D decreases if the approach distance D of the object is within a first threshold distance X1, and by varying the varied basic reaction torque T1' to be additionally increased or decreased if the approach distance D of the object is between a second threshold distance X2 and a third threshold distance X3, and the reaction motor is driven based on the final reaction torque T2.

The pedal feeling mode may include a fifth mode in which, 1) if the approach distance of the object is within a first threshold distance X1, the basic reaction force torque T1 repeats increase and decrease at a specific cycle, and the final reaction torque T2 is determined by varying the basic reaction torque T1 so as for an increase and decrease in torque of the basic reaction torque T1 to increase as the approach distance D decreases, and 2) if the approach distance of the object is between a second threshold distance X2 and a third threshold distance X3, the final reaction torque T2 is determined by varying the varied basic reaction torque T1' to be additionally increased or decreased, and the reaction motor is driven based on the final reaction torque T2.

The sensor may include at least one of a front radar sensor for detecting a speed and distance of a front object, a rear radar sensor for detecting a speed and distance of a rear object, and a side radar sensor for detecting a speed and distance of a side object.

In accordance with an aspect of the present disclosure, there is provided a method for a collision risk warning of a chainless electric bicycle including detecting, by a detector, a movement of an object within a surveillance area based on information transmitted from a sensor, determining, by a determiner, an approach distance D of the object in response to a detection of the movement of the object by the detector, and determining, by a pedal load adjuster, a final reaction torque T2 by varying a basic reaction torque T1 according to the approach distance D, and driving a reaction motor based on the final reaction torque T2.

The method for a collision risk warning of a chainless electric bicycle may further include adjusting, by a pedal feeling controller, the basic reaction torque according to a rotation of a pedal to match a target pedal feeling corresponding to the rotation of the pedal.

The method for a collision risk warning of a chainless electric bicycle may further include controlling, by a mode selector, the pedal load adjuster to generate a pedal load corresponding to a pedal feeling mode selected by a mode switch among a plurality of pedal feeling modes.

According to embodiments, there may provide a device and method for a collision risk warning of a chainless electric bicycle capable of notifying a collision risk situation based on the load condition when the user pedals.

### BRIEF DESCRIPTION OF THE DRAWINGS

FIGS. 1 and 2 are perspective views illustrating a chainless electric bicycle according to an embodiment.
FIG. 3 is a block diagram illustrating a collision risk warning device for a chainless electric bicycle.
FIG. 4 is a block diagram illustrating a controller of the collision risk warning device.
FIG. 5 is a graph illustrating a final reaction torque according to an approach distance in the case that a first mode is selected.
FIG. 6 is a graph illustrating a final reaction torque according to an approach distance in the case that a second mode is selected.
FIG. 7 is a graph illustrating a final reaction torque according to an approach distance in the case that a third mode is selected.
FIG. 8 is a graph illustrating a final reaction torque according to an approach distance in the case that a fourth mode is selected.
FIG. 9 is a graph illustrating a final reaction torque according to an approach distance in the case that a fifth mode is selected.
FIG. 10 is a flowchart illustrating a collision risk warning method for a chainless electric bicycle according to an embodiment.
FIG. 11 is a flowchart illustrating a collision risk warning method for a chainless electric bicycle according to an embodiment.

### DETAILED DESCRIPTION

In the following description of examples or embodiments of the present disclosure, reference will be made to the accompanying drawings in which it is shown by way of illustration specific examples or embodiments that can be implemented, and in which the same reference numerals and signs can be used to designate the same or like components even when they are shown in different accompanying drawings from one another. Further, in the following description of examples or embodiments of the present disclosure, detailed descriptions of well-known functions and components incorporated herein will be omitted when it is determined that the description may make the subject matter in some embodiments of the present disclosure rather unclear. The terms such as "including", "having", "containing", "constituting" "make up of", and "formed of" used herein are generally intended to allow other components to be added unless the terms are used with the term "only". As used herein, singular forms are intended to include plural forms unless the context clearly indicates otherwise.

Terms, such as "first", "second", "A", "B", "(A)", or "(B)" may be used herein to describe elements of the disclosure. Each of these terms is not used to define essence, order, sequence, or number of elements etc., but is used merely to distinguish the corresponding element from other elements.

When it is mentioned that a first element "is connected or coupled to", "contacts or overlaps" etc. a second element, it should be interpreted that, not only can the first element "be directly connected or coupled to" or "directly contact or overlap" the second element, but a third element can also be "interposed" between the first and second elements, or the first and second elements can "be connected or coupled to", "contact or overlap", etc. each other via a fourth element. Here, the second element may be included in at least one of two or more elements that "are connected or coupled to", "contact or overlap", etc. each other.

When time relative terms, such as "after," "subsequent to," "next," "before," and the like, are used to describe processes or operations of elements or configurations, or flows or steps in operating, processing, manufacturing methods, these terms may be used to describe non-consecutive or non-sequential processes or operations unless the term "directly" or "immediately" is used together.

In addition, when any dimensions, relative sizes etc. are mentioned, it should be considered that numerical values for an elements or features, or corresponding information (e.g., level, range, etc.) include a tolerance or error range that may be caused by various factors (e.g., process factors, internal or external impact, noise, etc.) even when a relevant description is not specified. Further, the term "may" fully encompasses all the meanings of the term "can".

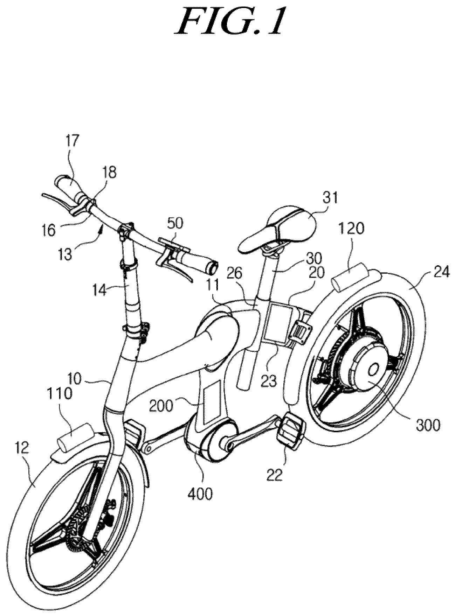

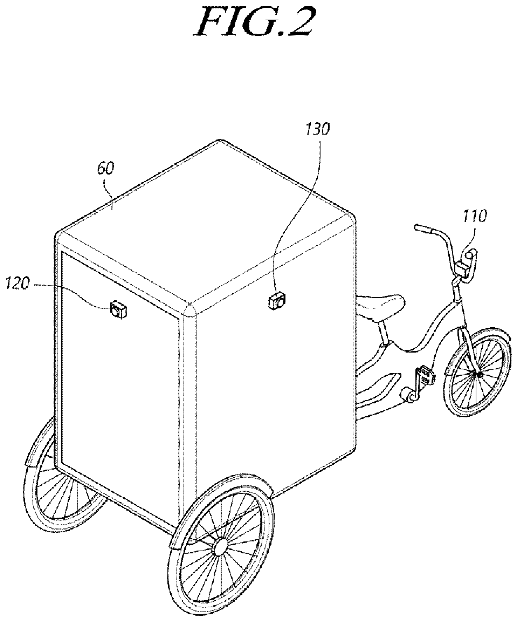

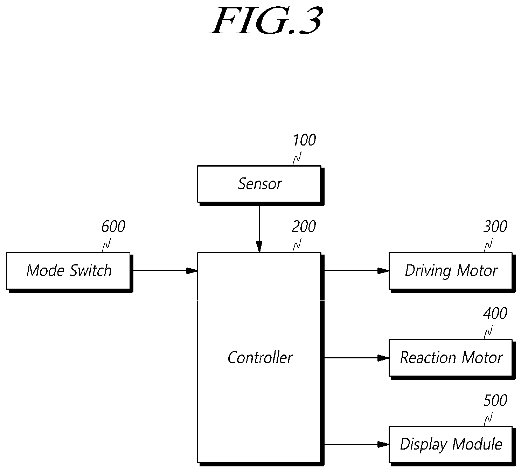

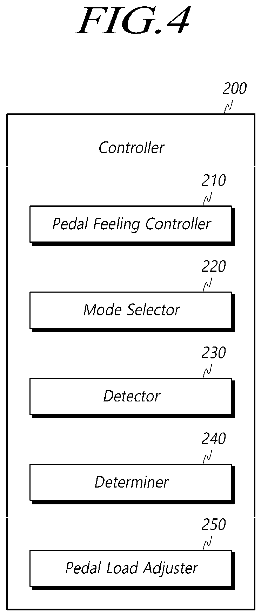

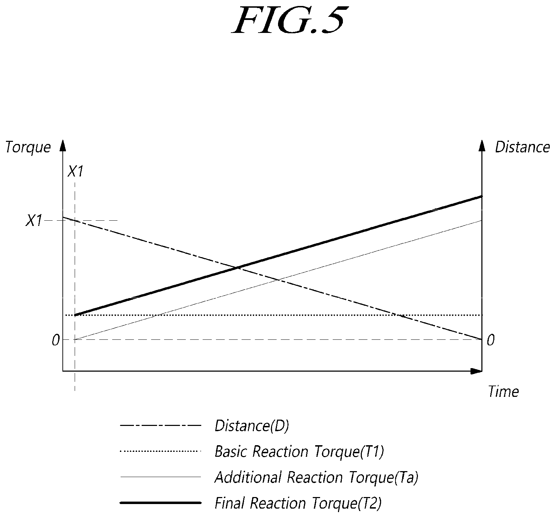

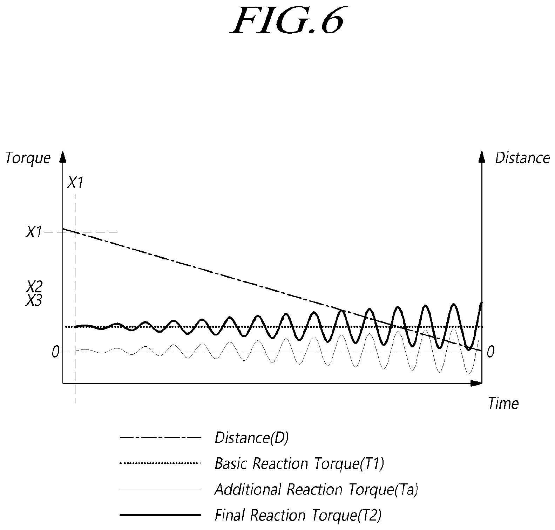

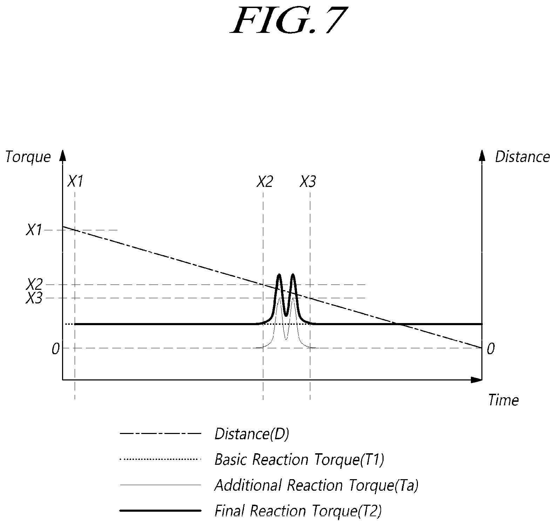

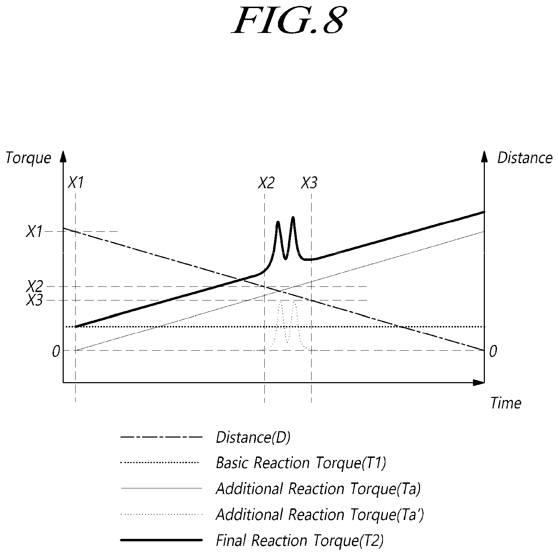

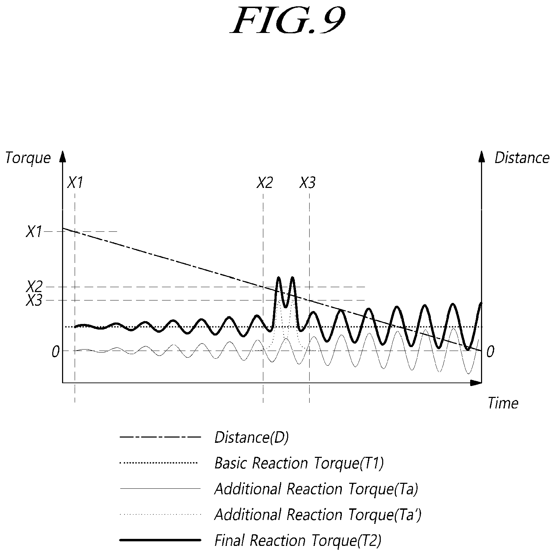

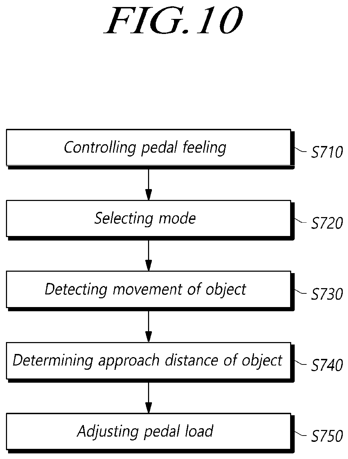

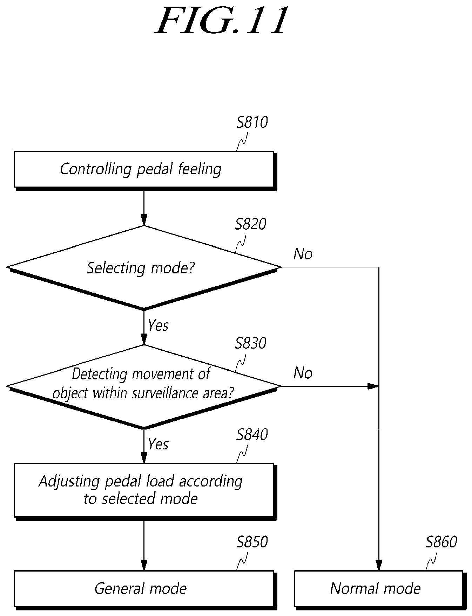

FIGS. 1 and 2 are perspective views illustrating a chainless electric bicycle according to an embodiment, FIG. 3 is a block diagram illustrating a collision risk warning device for a chainless electric bicycle, FIG. 4 is a block diagram illustrating a controller of the collision risk warning device, FIG. 5 is a graph illustrating a final reaction torque according to an approach distance in the case that a first mode is selected, FIG. 6 is a graph illustrating a final reaction torque according to an approach distance in the case that a second mode is selected, FIG. 7 is a graph illustrating a final reaction torque according to an approach distance in the case that a third mode is selected, FIG. 8 is a graph illustrating a final reaction torque according to an approach distance in the case that a fourth mode is selected, FIG. 9 is a graph illustrating a final reaction torque according to an approach distance in the case that a fifth mode is selected, FIG. 10 is a flowchart illustrating a collision risk warning method for a chainless electric bicycle according to an embodiment, and FIG. 11 is a flowchart illustrating a collision risk warning method for a chainless electric bicycle according to an embodiment.

Referring to FIG. 1, an electric bicycle may include a main frame including a front frame 10, a rear frame 20, and a saddle frame 30.

The front frame 10 and the rear frame 20 may be rotatably coupled about a hinge axis of a hinge plate 11.

A handle stay 14 on which a steering wheel 12 and a handle unit 13 are mounted may be coupled to the front frame 10.

The handle unit 13 may include a handle bar 16 coupled to the handle stay 14, a handle grip 17 mounted on the handle bar 16, and a throttle 18 for receiving an acceleration command from the user.

Here, an interface device 50 may be installed on the handle grip 17 to display the status of the electric bicycle to the user and transmit the user's request to a controller 200, which will be described later, through a button.

This interface device 50 may include a display module 500 and a mode switch 600, and may be electrically connected to the controller 200.

The throttle 18 may be in the form of a lever capable of being operated by the user, and may transmit a signal indicating the throttle opening to the controller 200 according to the user's rotation manipulation.

For example, If a user rotates the throttle 18 for acceleration, the controller 200 may detect the throttle opening according to the degree of rotation of the throttle 18.

If a change in the throttle opening is detected, the controller 200 may drive a speed of a driving motor 300 at a preset speed.

In an embodiment of the present disclosure, the steering wheel 12 may be mounted on the lower right side of the handle stay 14, and may also be mounted on the handle stay 14 that has a fork shape like a typical bicycle.

A reaction motor 400 may be provided at one side of the rear frame 20, and pedals 22 may be rotatably mounted on both sides of the reaction motor 400.

In this case, if the user rotates the pedal 22, the rotational force of the pedal 22 may be converted into electrical energy by a generator (not shown), and the electrical energy of the generator (not shown) may be charged in a battery 23.

A driving wheel 24 may be mounted on the left side of the other end of the rear frame 20, and may also be mounted on the rear frame 40 which has a fork shape like a typical bicycle.

The driving motor 300 may be mechanically connected to the driving wheel 24 rotatably mounted on the rear frame 20, and may generate driving force by power supplied from the battery 23 to rotate the driving wheel 24.

In this case, the controller 200 may control the driving motor 300 to rotate the driving wheel 24 to correspond to a pedal torque.

That is, the controller 200 may control the rotational speed or torque of the driving motor 300 to increase as the pedal torque increases, and control the rotational speed or torque of the driving motor 300 to decrease as the pedal torque decreases.

The driving motor 300 may be equipped with a transmission device so that the user can change the rotational speed of the driving wheel 24 by manipulating the interface device 50.

In addition, the rear frame 20 may be equipped with the battery 23 which store electrical energy converted through a generator (not shown, and the controller 200.

In this case, the battery 23 may be built not only into the rear frame 20 but also into the front frame 10.

A seat tube 26 may be coupled or formed on the middle side of the rear frame 20, and a saddle frame 30 may be coupled to the seat tube 26.

The saddle frame 30 may be coupled to the seat tube 26, and may be equipped with a saddle 31 that supports the user's body.

The chainless electric bicycle of this embodiment may be equipped with a front radar sensor 110 for detecting a speed and distance of a front object on the front frame 10, and a rear radar sensor 120 for detecting a speed and distance of a rear object on the rear frame 20.

Referring to FIG. 2, in this embodiment, a collision risk warning device may be installed on a three-wheel chainless electric bicycle. In addition, a front radar sensor 110 for detecting the speed and distance of the front object, a rear radar sensor 120 for detecting the speed and distance of a rear object, and a side radar sensor 130 for detecting a speed and distance of a side object may be mounted on the front, rear, and sides of a loading box 60 of a three-wheel chainless electric bicycle.

In this case, if the front radar sensor 110 is installed, there may be detected the speed and distance to a front object including vehicles, motorcycles, bicycles, people, etc. If the rear radar sensor 120 is installed, there may be detected the speed and distance to a rear object including vehicles, motorcycles, bicycles, people, etc. in addition, if the side radar sensor 130 is installed, there may be detected the speed and distance to a side object including vehicles, motorcycles, bicycles, people, etc.

A collision risk warning device for the chainless electric bicycle according to this embodiment may include a reaction motor 400 which is installed on a pedal for controlling a speed or a torque of a driving motor, and generates a basic reaction torque T1 according to rotation of the pedal, and a controller 200 which detects a movement of an object in a surveillance area based on information transmitted from a sensor 100 and determine an approach distance D of the object, and drives the reaction motor based on a final reaction torque T2 determined by varying the basic reaction torque T1 according to the approach distance D.

Referring to FIG. 3, the reaction motor 400 may be installed on the pedal 22, which controls the rotation speed or torque of the driving motor 300, and may generate a basic reaction torque T1 according to the rotation of the pedal 22.

The reaction motor 400 may adjust the load on the pedal 22 according to the basic reaction torque T1. Therefore, the reaction motor 400 may provide a pedal feeling as if there is a chain when stepping on the pedal 22, or may prevent the rider from feeling a pedal feeling.

The sensor 100 may include a front radar sensor 110 for detecting the speed and distance of a front object, a rear radar sensor 120 for detecting the speed and distance of a rear object, and a side radar sensor 130 for detecting the speed and distance of a side object.

Additionally, the sensor 100 may be installed at the front, rear, and sides of the chainless electric bicycle, and may include a radar sensor and/or a LiDAR(LIght Detection And Ranging) sensor.

A radar sensor may detect the distance to an object using radio waves. The radar sensor may detect the relative distance and relative speed with the object by measuring the time when an outputted radio wave propagates to the object, reflects, and returns.

A LIDAR sensor may utilizes light to detect the distance to an object. The LIDAR sensor may measure the time for the outputted light to hit the object, reflect, and return to determine the relative distance and relative speed to the object.

Here, relative distance may refer to a distance between the chainless electric bicycle and the object, and relative speed may refer to the difference in speed between the speed of the chainless electric bicycle and the object.

The sensor 100 may detect the relative speed and relative distance of objects existing around the chainless electric bicycle and transmit information on the relative speed and relative distance of objects to the controller 200.

The controller 200 may detect a movement of an object in the surveillance area based on the information transmitted from the sensor 100, may determine an approach distance D of the object, and may drive the reaction motor 400 based on a final reaction torque T2 obtained by varying the basic reaction torque T1 according to the approach distance D.

The controller 200 may include a pedal feeling controller 210, a mode selector 220, a detector 230, a determiner 240, and a pedal load adjuster 250.

Referring to FIG. 4, the pedal feeling controller 210 may adjust the basic reaction torque T1 according to the rotation of the pedal 22 to match a target pedal feeling corresponding to the rotation of the pedal 22.

Accordingly, the pedal feeling controller 210 may drive the reaction force motor 400 based on the basic reaction force torque T1 according to the rotation of the pedal 22.

Then, the detector 230 may detect the movement of an object in the surveillance area based on the information transmitted from the sensor 100. If the detector 230 detects the movement of the object, the determiner 240 may determine the approach distance D of the object, and the pedal load adjuster 250 may vary or change the basic reaction torque T1 according to the approach distance D determined from the determiner 240 to determine the final reaction torque T2, and drive the reaction motor 400 based on the final reaction torque T2.

That is, in this embodiment, if the detector 230 detects the movement of an object, the determiner 240 may determine the approach distance D of the object. In addition, the pedal load adjuster 250 may drive the reaction motor 400 based on the final reaction torque T2 determined by the basic reaction torque T1 according to the rotation of the pedal 22 and the additional reaction torque Ta added according to the approach distance D.

The mode selector 220 may control the pedal load adjuster 250 to generate a pedal load corresponding to the pedal feeling mode selected by the mode switch 600 among the plurality of pedal feeling modes.

Referring to FIG. 3, the collision risk warning device of the present embodiment may include a mode switch 600 for selecting one of a plurality of pedal feeling modes, and a display module 500 for representing the pedal feeling mode selected by the mode switch 600.

The mode switch 600 is used to select one of a plurality of pedal feeling modes, and may be provided on the interface device 50 installed on the handle grip 17 and electrically connected to the controller 200.

The display module 500 may be used to display information corresponding to the pedal feeling mode selected by the mode switch 600, and may be provided in the interface device 50 installed on the handle grip 17 and electrically connected to the controller 200.

The mode switch 600 and display module 500 may be built into or integrated into the interface device 50 and installed on the handle grip 17, or may be individually installed on the handle grip 17.

In this embodiment, in the case that the user operates the mode switch 600 and selects one of the preset pedal feeling modes, the reaction force motor 400 may be driven based on the final reaction force torque T2 according to the pedal feeling mode selected according to the approach distance D of the object.

That is, in this embodiment, if the detector 230 detects the movement of an object in the surveillance area based on the information transmitted from the sensor 100, the determiner 240 may determine the approach distance D of the object. In addition, the pedal load adjuster 250 may add an additional reaction torque Ta to the basic reaction torque T1 according to the rotation of the pedal 22 according to the approach distance D determined from the determination unit 240 to determine the final reaction torque T2, and may drive the reaction motor 400 based on the determined final reaction torque T2.

For example, the pedal feeling modes may include a first mode in which, if the approach distance D of the object is within a first threshold distance X1, the final reaction torque T2 is determined by varying the basic reaction torque T1 to be increased or decreased as the approach distance D decreases, the reaction motor 400 is driven based on the final reaction torque T2.

Referring to FIG. 5, in the first mode, if the approach distance D of the object is within the preset first threshold distance X1, as the approach distance D approaches 0, the final reaction torque T2 may be determined by adding additional reaction torque Ta to the basic reaction torque T1 so that the basic reaction torque T1 increases, and the reaction motor 400 may be driven based on the determined final reaction torque T2.

Alternatively, in the first mode, if the approach distance D of the object is within the preset first threshold distance X1, as the approach distance D approaches 0, the final reaction torque T2 may be determined by subtracting the additional reaction torque Ta from the basic reaction torque T1 to reduce the basic reaction torque T1, and the reaction motor 400 may be driven based on the determined final reaction torque T2.

In addition, the pedal feeling modes may include a second mode in which, if the approach distance D of the object is within a first threshold distance X1, the basic reaction force torque T1 repeats increase and decrease at a specific cycle, and the final reaction torque T2 is determined by varying the basic reaction torque T1 so as for an increase and decrease in torque of the basic reaction torque T1 to increase as the approach distance D decreases, and the reaction motor is driven based on the final reaction torque T2.

Referring to FIG. 6, in the second mode, if the approach distance D of the object is within a first threshold distance X1, the basic reaction force torque T1 repeats increase and decrease at a specific cycle, and the final reaction torque T2 may be determined by adding an additional reaction torque Ta to the basic reaction torque T1 so as for an increase and decrease in torque of the basic reaction torque T1 to increase as the approach distance D decreases, and the reaction motor 400 may be driven based on the final reaction torque T2.

In addition, the pedal feeling modes may include a third mode in which, if the approach distance D of the object is between a second threshold distance X2 and a third threshold distance X3, the final reaction torque T2 is determined by varying the basic reaction torque T1 to be increased or decreased, and the reaction motor 400 is driven based on the final reaction torque T2.

Referring to FIG. 7, in the third mode, if the approach distance D of the object is between the preset second threshold distance X2 and third threshold distance X3, the final reaction torque T2 may be determined by adding additional reaction torque Ta to the basic reaction torque T1 to increase the basic reaction torque T1, and the reaction motor 400 may be driven based on the final reaction torque T2.

Alternatively, in the third mode, if the approach distance D of the object is between the preset second threshold distance X2 and third threshold distance X3, the final reaction torque T2 may be determined by subtracting additional reaction torque Ta from the basic reaction torque T1 to decrease the basic reaction torque T1, and the reaction motor 400 may be driven based on the final reaction torque T2.

In addition, the pedal feeling modes may include a fourth mode in which, the final reaction torque T2 may be determined by varying the basic reaction torque T1 to be increased or decreased as the approach distance D decreases if the approach distance D of the object is within a first threshold distance X1, and by varying the varied basic reaction torque T1' to be additionally increased or decreased if the approach distance D of the object is between a second threshold distance X2 and a third threshold distance X3, and the reaction motor may be driven based on the final reaction torque T2.

Referring to FIG. 8, in the fourth mode, if the approach distance D of the object is within the preset first threshold distance X1, the final reaction torque T2 may be determined by adding additional reaction torque Ta to the basic reaction torque T1 to increase the basic reaction torque T1 as the approach distance D approaches 0. In addition, if the approach distance D of the object is between the preset second threshold distance X2 and third threshold distance X3, the final reaction torque T2 may be determined by adding additional reaction torque Ta' to the varied basic reaction torque T1' so that the varied basic reaction torque T1' further increases, and the reaction motor 400 may be driven based on the final reaction torque T2.

Alternatively, in the fourth mode, if the approach distance D of the object is within the preset first threshold distance X1, the final reaction torque T2 may be determined by subtracting additional reaction torque Ta from the basic reaction torque T1 to decrease the basic reaction torque T1 as the approach distance D approaches 0. In addition, if the approach distance D of the object is between the preset second threshold distance X2 and third threshold distance X3, the final reaction torque T2 may be determined by subtracting additional reaction torque Ta' from the varied basic reaction torque T1' so that the varied basic reaction torque T1' further decreases, and the reaction motor 400 may be driven based on the final reaction torque T2.

In addition, the pedal feeling modes may include a fifth mode in which, 1) if the approach distance D of the object is within a first threshold distance X1, the basic reaction force torque T1 repeats increase and decrease at a specific cycle, and the final reaction torque T2 is determined by varying the basic reaction torque T1 so as for an increase and decrease in torque of the basic reaction torque T1 to increase as the approach distance D decreases, and 2) if the approach distance D of the object is between a second threshold distance X2 and a third threshold distance X3, the final reaction torque T2 is determined by varying the varied basic reaction torque T1' to be additionally increased or decreased, and the reaction motor 400 is driven based on the final reaction torque T2.

Referring to FIG. 9, in the fifth mode, if the approach distance D of the object is within a first threshold distance X1, the basic reaction force torque T1 repeats increase and decrease at a specific cycle, and the final reaction torque T2 may be determined by adding additional reaction torque Ta to the basic reaction torque T1 so as for an increase and decrease in torque of the basic reaction torque T1 to increase as the approach distance D decreases. In addition, if the approach distance D of the object is between a second threshold distance X2 and a third threshold distance X3, the final reaction torque T2 may be determined by further adding additional reaction torque Ta' to the varied basic reaction torque T1' to be additionally increased, and the reaction motor 400 is driven based on the final reaction torque T2.

Alternatively, in the fifth mode, if the approach distance D of the object is within a first threshold distance X1, the basic reaction force torque T1 repeats increase and decrease at a specific cycle, and the final reaction torque T2 may be determined by subtracting additional reaction torque Ta from the basic reaction torque T1 so as for an increase and decrease in torque of the basic reaction torque T1 to increase as the approach distance D decreases. In addition, if the approach distance D of the object is between a second threshold distance X2 and a third threshold distance X3, the final reaction torque T2 may be determined by further subtracting additional reaction torque Ta' from the varied basic reaction torque T1' to be additionally decreased, and the reaction motor 400 is driven based on the final reaction torque T2.

A collision risk warning method for a chainless electric bicycle according to an embodiment may include controlling, by a pedal feeling controller 210, the basic reaction torque T1 according to the rotation of the pedal 22 to match a target pedal feeling corresponding to the rotation of the pedal 22 (S710); controlling a pedal load adjuster 250, by a mode selector 220, to generate a pedal load corresponding to the pedal feeling mode selected by the mode switch 600 among the plurality of pedal feeling modes (S720); detecting, by a detector 230, a movement of an object within a surveillance area based on information transmitted from a sensor 100 (S730); determining, by a determiner 240, an approach distance D of the object in response to a detection of the movement of the object by the detector 230 (S740); and determining, by a pedal load adjuster 250, a final reaction torque T2 by varying a basic reaction torque T1 according to the approach distance D, and driving a reaction motor 400 based on the final reaction torque (S750).

Referring to FIGS. 10 and 11, in step S710, the pedal feeling controller 210 may adjusts the basic reaction torque T1 according to the rotation of the pedal 22 to match the target pedal feeling corresponding to the rotation of the pedal 22 (S810).

Accordingly, the pedal feeling controller 210 may drive the reaction force motor 400 based on the basic reaction force torque T1 according to the rotation of the pedal 22.

In step S720, if the user operates the mode switch 600 to select one of the preset pedal feeling modes, the mode selector 220 may control the pedal load adjuster 250 to generate a pedal load corresponding to the pedal feeling mode selected by the mode switch 600 among the plurality of pedal feeling modes (S820).

In this case, in step S720, if the user operates the mode switch 600 and selects one of the preset pedal feeling modes, information on the pedal feeling mode selected by the mode switch 600 may be displayed on the display module 500.

In addition, in step S730 after step S720, the detector 230 may detect the movement of objects in the surveillance area based on the information transmitted from the sensor 100 (S830).

In step S740, if the detector 230 detects the movement of the object in step S730, the determiner 240 may determine the approach distance D of the object. (S840)

In addition, in step S750, the pedal load adjuster 250 may determine the final reaction torque T2 by varying the basic reaction torque T1 according to the approach distance D determined from the determiner 240 according to the pedal feeling mode selected by the mode switch 600, and may drive the reaction motor 400 based on the reaction torque T2 (S850).

That is, in step S750, the pedal load adjuster 250 may determine the final reaction torque T2 by adding an additional reaction torque Ta to the basic reaction torque T1 due to the rotation of the pedal 22 according to the approach distance D determined from the determiner 240, may drive the reaction motor 400 based on the final reaction torque T2.

In this case, if the pedal feeling mode is not selected or the movement of an object in the surveillance area is not detected, the reaction motor 400 may be driven, in a general mode, based on the basic reaction torque T1 according to the rotation of the pedal 22 (S860).

For example, the pedal feeling modes may include a first mode in which, if the approach distance D of the object is within a first threshold distance X1, the final reaction torque T2 is determined by varying the basic reaction torque T1 to be increased or decreased as the approach distance D decreases, the reaction motor 400 is driven based on the final reaction torque T2.

In addition, the pedal feeling modes may include a second mode in which, if the approach distance D of the object is within a first threshold distance X1, the basic reaction force torque T1 repeats increase and decrease at a specific cycle, and the final reaction torque T2 is determined by varying the basic reaction torque T1 so as for an increase and decrease in torque of the basic reaction torque T1 to increase as the approach distance D decreases, and the reaction motor is driven based on the final reaction torque T2.

In addition, the pedal feeling modes may include a third mode in which, if the approach distance D of the object is between a second threshold distance X2 and a third threshold distance X3, the final reaction torque T2 is determined by varying the basic reaction torque T1 to be increased or decreased, and the reaction motor 400 is driven based on the final reaction torque T2.

In addition, the pedal feeling modes may include a fourth mode in which, the final reaction torque T2 may be determined by varying the basic reaction torque T1 to be increased or decreased as the approach distance D decreases if the approach distance D of the object is within a first threshold distance X1, and by varying the varied basic reaction torque T1' to be additionally increased or decreased if the approach distance D of the object is between a second threshold distance X2 and a third threshold distance X3, and the reaction motor may be driven based on the final reaction torque T2.

In addition, the pedal feeling modes may include a fifth mode in which, 1) if the approach distance D of the object is within a first threshold distance X1, the basic reaction force torque T1 repeats increase and decrease at a specific cycle, and the final reaction torque T2 is determined by varying the basic reaction torque T1 so as for an increase and decrease in torque of the basic reaction torque T1 to increase as the approach distance D decreases, and 2) if the approach distance D of the object is between a second threshold distance X2 and a third threshold distance X3, the final reaction torque T2 is determined by varying the varied basic reaction torque T1' to be additionally increased or decreased, and the reaction motor 400 is driven based on the final reaction torque T2.

According to the present embodiments, if the user operates the mode switch 600 and selects one of the preset pedal feeling modes, the controller 200 may control to generate the pedal load corresponding to the pedal feeling mode selected by the mode switch 600 among the plurality of pedal feeling modes. Accordingly, the user may recognize a collision risk situation based on the load applied during stepping on the pedal 22.

The above description has been presented to enable any person skilled in the art to make and use the technical idea of the present disclosure, and has been provided in the context of a particular application and its requirements. The above description and the accompanying drawings provide an example of the technical idea of the present disclosure for illustrative purposes only. That is, the disclosed embodiments are intended to illustrate the scope of the technical idea of the present disclosure. Thus, the scope of the present disclosure is not limited to the embodiments shown, but is to be accorded the widest scope consistent with the claims.

## Claims

1. A device for a collision risk warning of a chainless electric bicycle comprising:
a reaction motor (400) configured to be installed on a pedal (22) which controls a speed or a torque of a driving motor (300), and generate a basic reaction torque according to rotation of the pedal (22); and
a controller (200) configured to detect a movement of an object in a surveillance area based on information transmitted from a sensor (100) and determine an approach distance of the object, and drive the reaction motor (400) based on a final reaction torque determined by varying the basic reaction torque according to the approach distance.

2. The device of claim 1, wherein the controller (200) comprises:
a detector (230) configured to detect the movement of the object within the surveillance area based on the information transmitted from the sensor (100);
a determiner (240) configured to determine the approach distance of the object in response to a detection of the movement of the object by the detector (230); and
a pedal load adjuster (250) configured to determine the final reaction torque by varying the basic reaction torque according to the approach distance determined from the determiner (240), and drive the reaction motor (400) based on the final reaction torque.

3. The device of claim 1 or 2, wherein the controller (200) further comprises a pedal feeling controller (210) configured to adjust the basic reaction torque according to the rotation of the pedal (22) to match a target pedal feeling corresponding to the rotation of the pedal (22).

4. The device of claim 3, further comprising a mode switch (600) to select one of a plurality of pedal feeling modes.

5. The device of claim 4, further comprising a display module (500) configured to display a pedal feeling mode selected by the mode switch (600).

6. The device of claim 4 or 5, wherein the controller (200) comprises a mode selector (220) configured to control the pedal load adjuster (250) to generate a pedal load corresponding to the pedal feeling mode selected by the mode switch (600) among the plurality of pedal feeling modes.

7. The device of one of claims 4 to 6, wherein the pedal feeling mode include a first mode in which, if the approach distance of the object is within a first threshold distance, the final reaction torque is determined by varying the basic reaction torque to be increased or decreased as the approach distance decreases, the reaction motor (400) is driven based on the final reaction torque.

8. The device of one of claims 4 to 7, wherein the pedal feeling mode include a second mode in which, if the approach distance of the object is within a first threshold distance, the basic reaction force torque repeats increase and decrease at a specific cycle, and the final reaction torque is determined by varying the basic reaction torque so as for an increase and decrease in torque of the basic reaction torque to increase as the approach distance decreases, and the reaction motor (400) is driven based on the final reaction torque.

9. The device of one of claims 4 to 8, wherein the pedal feeling mode include a third mode in which, if the approach distance of the object is between a second threshold distance and a third threshold distance, the final reaction torque is determined by varying the basic reaction torque to be increased or decreased, and the reaction motor (400) is driven based on the final reaction torque.

10. The device of one of claims 4 to 9, wherein the pedal feeling mode include a fourth mode in which, the final reaction torque is determined by varying the basic reaction torque to be increased or decreased as the approach distance decreases if the approach distance of the object is within a first threshold distance, and by varying the varied basic reaction torque to be additionally increased or decreased if the approach distance of the object is between a second threshold distance and a third threshold distance, and the reaction motor (400) is driven based on the final reaction torque.

11. The device of one of claims 4 to 10, wherein the pedal feeling mode include a fifth mode in which, 1) if the approach distance of the object is within a first threshold distance, the basic reaction force torque repeats increase and decrease at a specific cycle, and the final reaction torque is determined by varying the basic reaction torque so as for an increase and decrease in torque of the basic reaction torque to increase as the approach distance decreases, and 2) if the approach distance of the object is between a second threshold distance and a third threshold distance, the final reaction torque is determined by varying the varied basic reaction torque to be additionally increased or decreased, and the reaction motor (400) is driven based on the final reaction torque.

12. The device of one of claims 1 to 11, wherein the sensor (100) comprises at least one of a front radar sensor (110) for detecting a speed and distance of a front object, a rear radar sensor (120) for detecting a speed and distance of a rear object, and a side radar sensor (130) for detecting a speed and distance of a side object.

13. A method for a collision risk warning of a chainless electric bicycle comprising:
detecting, by a detector (230), a movement of an object within a surveillance area based on information transmitted from a sensor (100);
determining, by a determiner (240), an approach distance of the object in response to a detection of the movement of the object by the detector (230); and
determining, by a pedal load adjuster (250), a final reaction torque by varying a basic reaction torque according to the approach distance, and driving a reaction motor (400) based on the final reaction torque.

14. The method of claim 13, further comprising:
controlling, by a pedal feeling controller (210), the basic reaction torque according to a rotation of a pedal (22) to match a target pedal feeling corresponding to the rotation of the pedal (22).

15. The method of claim 13 or 14, further comprising:
controlling, by a mode selector (220), the pedal load adjuster (250) to generate a pedal load corresponding to a pedal feeling mode selected by a mode switch (600) among a plurality of pedal feeling modes.

## Patentansprüche

1. Kollisionsgefahr-Warnvorrichtung eines kettenlosen Elektrofahrrads, umfassend:
einen Reaktionsmotor (400), der eingerichtet ist, auf einem Pedal (22) installiert zu werden, das eine Geschwindigkeit oder ein Drehmoment eines Antriebsmotors (300) steuert, und ein Grundreaktionsdrehmoment entsprechend der Drehung des Pedals (22) zu erzeugen; und
eine Steuerung (200), die eingerichtet ist, eine Bewegung eines Objekts in einem Überwachungsbereich auf der Grundlage von Informationen zu erfassen, die von einem Sensor (100) übertragen werden, und eine Annäherungsentfernung des Objekts zu bestimmen, und den Reaktionsmotor (400) auf der Grundlage eines endgültigen Reaktionsdrehmoments anzutreiben, das durch Variieren des Grundreaktionsdrehmoments gemäß der Annäherungsentfernung bestimmt wird.

2. Vorrichtung nach Anspruch 1, wobei die Steuerung (200) umfasst:
einen Detektor (230), der eingerichtet ist, die Bewegung des Objekts innerhalb des Überwachungsbereichs auf der Grundlage der vom Sensor (100) übertragenen Informationen zu erfassen;
eine Bestimmungsvorrichtung (240), die eingerichtet ist, die Annäherungsentfernung des Objekts in Reaktion auf eine Erfassung der Bewegung des Objekts durch den Detektor (230) zu bestimmen; und
einen Pedallasteinstellvorrichtung (250), die eingerichtet ist, das endgültige Reaktionsdrehmoment zu bestimmen, indem sie das Grundreaktionsdrehmoment entsprechend der von der Bestimmungsvorrichtung (240) bestimmten Annäherungsentfernung variiert, und den Reaktionsmotor (400) auf der Grundlage des endgültigen Reaktionsdrehmoments antreibt.

3. Vorrichtung nach Anspruch 1 oder 2, wobei die Steuerung (200) ferner eine Pedalgefühl-Steuervorrichtung (210) umfasst, die eingerichtet ist, das Grundreaktionsdrehmoment entsprechend der Drehung des Pedals (22) so anzupassen, dass es einem Ziel-Pedalgefühl entspricht, das der Drehung des Pedals (22) entspricht.

4. Vorrichtung nach Anspruch 3, ferner einen Modusschalter (600) zur Auswahl eines von mehreren Pedalgefühlmodi umfassend.

5. Vorrichtung nach Anspruch 4, ferner ein Anzeigemodul (500) umfassend, das eingerichtet ist, einen durch den Modusschalter (600) ausgewählten Pedalgefühlmodus anzuzeigen.

6. Vorrichtung nach Anspruch 4 oder 5, wobei die Steuerung (200) einen Moduswähler (220) umfasst, der eingerichtet ist, die Pedallasteinstellvorrichtung (250) so zu steuern, dass sie eine Pedallast erzeugt, die dem durch den Modusschalter (600) aus der Vielzahl der Pedalgefühlsmodi ausgewählten Pedalgefühlsmodus entspricht.

7. Vorrichtung nach einem der Ansprüche 4 bis 6, wobei der Pedalgefühlmodus einen ersten Modus umfasst, in dem, wenn die Annäherungsentfernung des Objekts innerhalb einer ersten Schwellenentfernung liegt, das endgültige Reaktionsdrehmoment bestimmt wird, indem das Grundreaktionsdrehmoment so variiert wird, dass es mit abnehmender Annäherungsentfernung ansteigt oder abfällt, und der Reaktionsmotor (400) auf der Grundlage des endgültigen Reaktionsdrehmoments angetrieben wird.

8. Vorrichtung nach einem der Ansprüche 4 bis 7, wobei der Pedalgefühlmodus einen zweiten Modus umfasst, in dem, wenn die Annäherungsentfernung des Objekts innerhalb einer ersten Schwellenentfernung liegt, das Grundreaktionskraftdrehmoment in einem bestimmten Zyklus wiederholt ansteigt und abfällt, und das endgültige Reaktionsdrehmoment bestimmt wird, indem das Grundreaktionsdrehmoment so variiert wird, dass ein Anstieg und ein Abfall des Drehmoments des Grundreaktionsdrehmoments zunimmt, wenn die Annäherungsentfernung abnimmt, und der Reaktionsmotor (400) basierend auf dem endgültigen Reaktionsdrehmoment angetrieben wird.

9. Vorrichtung nach einem der Ansprüche 4 bis 8, wobei der Pedalgefühlmodus einen dritten Modus umfasst, in dem, wenn die Annäherungsentfernung des Objekts zwischen einer zweiten Schwellenentfernung und einer dritten Schwellenentfernung liegt, das endgültige Reaktionsdrehmoment bestimmt wird, indem das Grundreaktionsdrehmoment so verändert wird, dass es ansteigt oder abfällt, und der Reaktionsmotor (400) basierend auf dem endgültigen Reaktionsdrehmoment angetrieben wird.

10. Vorrichtung nach einem der Ansprüche 4 bis 9, wobei der Pedalgefühlmodus einen vierten Modus umfasst, in dem das endgültige Reaktionsdrehmoment bestimmt wird, indem das Grundreaktionsmoment so variiert wird, dass es ansteigt oder abfällt, wenn die Annäherungsentfernung abnimmt, wenn die Annäherungsentfernung des Objekts innerhalb einer ersten Schwellenentfernung liegt, und indem das variierte Grundreaktionsmoment so variiert wird, dass es zusätzlich ansteigt oder abfällt, wenn die Annäherungsentfernung des Objekts zwischen einer zweiten Schwellenentfernung und einer dritten Schwellenentfernung liegt, und der Reaktionsmotor (400) basierend auf dem endgültigen Reaktionsdrehmoment angetrieben wird.

11. Vorrichtung nach einem der Ansprüche 4 bis 10, wobei der Pedalgefühlmodus einen fünften Modus umfasst, bei dem 1) wenn die Annäherungsentfernung des Objekts innerhalb einer ersten Schwellenentfernung liegt, das Grundreaktionskraftdrehmoment in einem bestimmten Zyklus wiederholt ansteigt und abfällt, und das endgültige Reaktionsdrehmoment bestimmt wird, indem das Grundreaktionsdrehmoment so variiert wird, dass das Drehmoment des Grundreaktionsdrehmoments ansteigt und abfällt, wenn die Annäherungsentfernung abnimmt, und 2) wenn die Annäherungsentfernung des Objekts zwischen einer zweiten Schwellenentfernung und einer dritten Schwellenentfernung liegt, wird das endgültige Reaktionsdrehmoment bestimmt, indem das veränderte Grundreaktionsdrehmoment so variiert wird, dass es zusätzlich ansteigt oder abfällt, und der Reaktionsmotor (400) auf der Grundlage des endgültigen Reaktionsdrehmoments angetrieben wird.

12. Vorrichtung nach einem der Ansprüche 1 bis 11, wobei der Sensor (100) mindestens einen Frontradarsensor (110) zum Erfassen einer Geschwindigkeit und einer Entfernung eines vorderen Objekts, einen Heckradarsensor (120) zum Erfassen einer Geschwindigkeit und einer Entfernung eines hinteren Objekts und einen Seitenradarsensor (130) zum Erfassen einer Geschwindigkeit und einer Entfernung eines seitlichen Objekts umfasst.

13. Verfahren zur Kollisionsgefahrwarnung eines kettenlosen Elektrofahrrads, umfassend:
Erfassen einer Bewegung eines Objekts innerhalb eines Überwachungsbereichs durch einen Detektor (230) auf der Grundlage von einem Sensor (100) übertragener Informationen;
Bestimmen einer Annäherungsentfernung des Objekts durch eine Bestimmungsvorrichtung (240) in Reaktion auf eine Erfassung der Bewegung des Objekts durch den Detektor (230); und
Bestimmen eines endgültigen Reaktionsdrehmoments durch eine Pedallasteinstellvorrichtung (250), indem ein Grundreaktionsdrehmoment entsprechend der Annäherungsentfernung variiert wird, und Antreiben eines Reaktionsmotors (400) basierend auf dem endgültigen Reaktionsdrehmoment.

14. Verfahren nach Anspruch 13, ferner umfassend:
Steuern des Grundreaktionsdrehmoments durch eine Pedalgefühl-Steuervorrichtung (210) in Abhängigkeit von einer Drehung eines Pedals (22), um ein Ziel-Pedalgefühl zu erreichen, das der Drehung des Pedals (22) entspricht.

15. Verfahren nach Anspruch 13 oder 14, ferner umfassend:
Steuern der Pedallasteinstellvorrichtung (250) durch einen Moduswähler (220), um eine Pedallast zu erzeugen, die einem Pedalgefühlmodus entspricht, der durch einen Modusschalter (600) aus einer Vielzahl von Pedalgefühlmodi ausgewählt wird.

## Revendications

1. Dispositif pour un avertissement de risque de collision d'une bicyclette électrique sans chaîne, comprenant :
un moteur à réaction (400) configuré pour être installé sur une pédale (22) qui commande une vitesse ou un couple d'un moteur d'entraînement (300), et pour générer un couple de réaction de base en fonction de la rotation de la pédale (22) ; et
un contrôleur (200) configuré pour détecter un déplacement d'un objet dans une zone de surveillance sur la base d'une information qui est transmise depuis un capteur (100) et pour déterminer une distance d'approche par rapport à l'objet, et pour entraîner le moteur à réaction (400) sur la base d'un couple de réaction final qui est déterminé en faisant varier le couple de réaction de base en fonction de la distance d'approche.

2. Dispositif selon la revendication 1, dans lequel le contrôleur (200) comprend :
un détecteur (230) configuré pour détecter le déplacement de l'objet à l'intérieur de la zone de surveillance sur la base de l'information qui est transmise depuis le capteur (100) ;
un moyen de détermination (240) configuré pour déterminer la distance d'approche par rapport à l'objet en réponse à une détection du déplacement de l'objet par le détecteur (230) ; et
un régleur de charge de pédale (250) configuré pour déterminer le couple de réaction final en faisant varier le couple de réaction de base en fonction de la distance d'approche qui a été déterminée par le moyen de détermination (240), et pour entraîner le moteur à réaction (400) sur la base du couple de réaction final.

3. Dispositif selon la revendication 1 ou 2, dans lequel le contrôleur (200) comprend en outre un contrôleur de sensation procurée par la pédale (210) configuré pour régler le couple de réaction de base en fonction de la rotation de la pédale (22) afin d'assurer une concordance avec une sensation cible procurée par la pédale qui correspond à la rotation de la pédale (22).

4. Dispositif selon la revendication 3, comprenant en outre un commutateur de mode (600) pour sélectionner l'un d'une pluralité de modes de sensation procurée par la pédale.

5. Dispositif selon la revendication 4, comprenant en outre un module d'affichage (500) configuré pour afficher un mode de sensation procurée par la pédale qui est sélectionné par le commutateur de mode (600).

6. Dispositif selon la revendication 4 ou 5, dans lequel le contrôleur (200) comprend un sélecteur de mode (220) configuré pour commander le régleur de charge de pédale (250) afin de générer une charge de pédale qui correspond au mode de sensation procurée par la pédale qui est sélectionné par le commutateur de mode (600) parmi la pluralité de modes de sensation procurée par la pédale.

7. Dispositif selon l'une quelconque des revendications 4 à 6, dans lequel le mode de sensation procurée par la pédale inclut un premier mode dans lequel, si la distance d'approche par rapport à l'objet est à l'intérieur d'une première distance de seuil, le couple de réaction final est déterminé en faisant varier le couple de réaction de base de telle sorte qu'il soit augmenté ou diminué lorsque la distance d'approche diminue, et le moteur de réaction (400) est entraîné sur la base du couple de réaction final.

8. Dispositif selon l'une quelconque des revendications 4 à 7, dans lequel le mode de sensation procurée par la pédale inclut un deuxième mode dans lequel, si la distance d'approche par rapport à l'objet est à l'intérieur d'une première distance de seuil, le couple de force de réaction de base répète une augmentation et une diminution selon un cycle spécifique, et le couple de réaction final est déterminé en faisant varier le couple de réaction de base de manière à réaliser une augmentation et une diminution de couple du couple de réaction de base de telle sorte qu'il soit augmenté lorsque la distance d'approche diminue, et le moteur de réaction (400) est entraîné sur la base du couple de réaction final.

9. Dispositif selon l'une quelconque des revendications 4 à 8, dans lequel le mode de sensation procurée par la pédale inclut un troisième mode dans lequel, si la distance d'approche par rapport à l'objet est entre une deuxième distance de seuil et une troisième distance de seuil, le couple de réaction final est déterminé en faisant varier le couple de réaction de base de telle sorte qu'il soit augmenté ou diminué, et le moteur de réaction (400) est entraîné sur la base du couple de réaction final.

10. Dispositif selon l'une quelconque des revendications 4 à 9, dans lequel le mode de sensation procurée par la pédale inclut un quatrième mode dans lequel le couple de réaction final est déterminé en faisant varier le couple de réaction de base de telle sorte qu'il soit augmenté ou diminué lorsque la distance d'approche diminue si la distance d'approche par rapport à l'objet est à l'intérieur d'une première distance de seuil, et en faisant varier le couple de réaction de base qui a été modifié de telle sorte que, de façon additionnelle, il soit augmenté ou diminué si la distance d'approche par rapport à l'objet est entre une deuxième distance de seuil et une troisième distance de seuil, et le moteur de réaction (400) est entraîné sur la base du couple de réaction final.

11. Dispositif selon l'une quelconque des revendications 4 à 10, dans lequel le mode de sensation procurée par la pédale inclut un cinquième mode dans lequel, 1) si la distance d'approche par rapport à l'objet est à l'intérieur d'une première distance de seuil, le couple de force de réaction de base répète une augmentation et une diminution selon un cycle spécifique, et le couple de réaction final est déterminé en faisant varier le couple de réaction de base de manière à réaliser une augmentation et une diminution de couple du couple de réaction de base de telle sorte qu'il soit augmenté lorsque la distance d'approche diminue, et 2) si la distance d'approche par rapport à l'objet est entre une deuxième distance de seuil et une troisième distance de seuil, le couple de réaction final est déterminé en faisant varier le couple de réaction de base qui a été modifié de telle sorte que, de façon additionnelle, il soit augmenté ou diminué, et le moteur de réaction (400) est entraîné sur la base du couple de réaction final.

12. Dispositif selon l'une quelconque des revendications 1 à 11, dans lequel le capteur (100) comprend au moins un capteur parmi un capteur radar avant (110) pour détecter une vitesse et une distance d'un objet à l'avant, un capteur radar arrière (120) pour détecter une vitesse et une distance d'un objet à l'arrière et un capteur radar latéral (130) pour détecter une vitesse et une distance d'un objet latéral.

13. Procédé pour un avertissement de risque de collision d'une bicyclette électrique sans chaîne, comprenant :
la détection, par un détecteur (230), d'un déplacement d'un objet à l'intérieur d'une zone de surveillance sur la base d'une information qui est transmise depuis un capteur (100) ;
la détermination, par un moyen de détermination (240), d'une distance d'approche par rapport à l'objet en réponse à une détection du déplacement de l'objet par le détecteur (230) ; et
la détermination, par un régleur de charge de pédale (250), d'un couple de réaction final en faisant varier un couple de réaction de base en fonction de la distance d'approche, et l'entraînement d'un moteur à réaction (400) sur la base du couple de réaction final.

14. Procédé selon la revendication 13, comprenant en outre :
la commande, par un contrôleur de sensation procurée par la pédale (210), du couple de réaction de base en fonction d'une rotation d'une pédale (22) afin d'assurer une concordance avec une sensation cible procurée par la pédale qui correspond à la rotation de la pédale (22).

15. Procédé selon la revendication 13 ou 14, comprenant en outre :
la commande, par un sélecteur de mode (220), du régleur de charge de pédale (250) afin de générer une charge de pédale qui correspond à un mode de sensation procurée par la pédale qui est sélectionné par un commutateur de mode (600) parmi une pluralité de modes de sensation procurée par la pédale.
